# EUROPEAN PATENT APPLICATION

(11) **EP 2 173 142 A1**
(43) Date of publication of application: **07.04.2010**
(21) Application number: 09171939.3
(22) Date of filing: 01.10.2009
(51) Int. Cl.: H05B 37/02

(54) **Light emission control device**

(30) Priority: 03.10.2008 JP 2008258352
(71) Applicant: Koito Manufacturing Co., Ltd., Tokyo 108-8711 (JP)
(72) Inventor: Murakami, Kentarou, Shizuoka (JP); Ito, Masayasu, Shizuoka (JP)
(74) Representative: HOFFMANN EITLE

(57) **Abstract**

A light emission control device is provided. The light emission control device includes a plurality of semiconductor light sources; and a control unit. The control unit includes a plurality of switch units and a controller. Each of the switch units is electrically coupled in series to a corresponding one of the semiconductor light sources and controls light of the semiconductor light source by being repeatedly turned on and off at regular intervals in a cycle. The controller controls turning on and off of the switch units, and includes a plurality of light control parts that send on/off-signals to the switch units, respectively, such that at least one part of a turning-on period of at least one of the semiconductor light sources overlaps at least one part of a turning-off period of the remaining semiconductor light sources.

## Description

### BACKGROUND OF THE INVENTION

### Technical Field

The present disclosure relates to a light emission control device, and more particularly, to a light emission control device that includes semiconductor light sources and a control unit for controlling the light of semiconductor light sources.

### Related Art

In general, a light emission control device includes a plurality of light source units such as semiconductor light sources, and a control unit that is connected to the plurality of light source units through power supply lines, respectively.

The control unit includes a plurality of switch elements (switch units) that control the light of the respective semiconductor light sources by being repeatedly turned on and off at regular intervals in a cycle, and a controller that controls the turning on and off of each of the switch elements (*see* e.g., JP-A-2006-73400).

The controller includes a plurality of timers (light control parts) that send on/off-signals to the respective switch elements as the outputs of the timers. The respective timers start counting and begin to count up at the same time, and send the on/off-signals to the switch elements, respectively. For example, when the on/off-signals correspond to a high level at the time of the start of the counting, if a count is increased and a counted value is equal to a first counted value, the on/off-signals are changed to a low level. If the count is increased further and the counted value corresponds to a second counted value, the on/off-signals are changed to a high level.

On-duty ratios of the on/off-signals, which are sent from the respective timers, are determined by the controller.

However, in the above-mentioned related art, the current, which flows at the former stage of each of the switch elements, is increased, generating an increase in power loss at a wiring internal resistor of the light emission control device. Further, noise is generated in a wiring circuit.

### SUMMARY OF THE INVENTION

It is an illustrative aspect of the present invention to suppress the increase in power loss at a wiring internal resistor, and to reduce the noise that is generated in a wiring circuit.

According to one or more illustrative aspects of the present invention, there is provided a light emission control device comprising a plurality of semiconductor light sources; and a control unit comprising a plurality of switch units each electrically coupled in series to a corresponding one of the semiconductor light sources and controlling light of the semiconductor light source by being repeatedly turned on and off at regular intervals in a cycle; and a controller that controls turning on and off of the switch units, the controller comprising a plurality of light control parts that send on/off-signals to the switch units, respectively, such that at least one part of a turning-on period of at least one of the semiconductor light sources overlaps at least one part of a turning-off period of the remaining semiconductor light sources.

Accordingly, the on/off-signals are sent to the respective switch units from the respective light control parts so that at least a part of a turning-on period of at least one semiconductor light source overlaps at least a part of a turning-off period of another semiconductor light source.

Accordingly, at least a part of the turning-on periods of the respective light control parts, which control the light of at least two semiconductor light sources, respectively, overlap at least a part of a turning-off period of another semiconductor light source. Therefore, it is possible to suppress the increase of the current that flows at the former stage of each of the switch units. As a result, it is possible to suppress the increase in power loss at a wiring internal resistor, and to reduce the noise that is generated in a wiring circuit.

According to one or more illustrative asepects of the present invention, the turning-on periods of the respective light control parts, which control the light of all semiconductor light sources, do not overlap one another. Accordingly, it is possible to reliably suppress the increase of the current that flows at the former stage of each of the switch units. Therefore, it is possible to reliably suppress the increase in power loss at a wiring internal resistor, and to reliably reduce the noise that is generated in a wiring circuit.

According to one or more illustrative aspects of the present invention, the turning-on periods of at least two semiconductor light sources partially overlap each other, and each of the light control parts sends the on/off-signals so that the time of overlap of the turning-on periods becomes shorter than the turning-on period. Accordingly, it is possible to shorten the time corresponding to the portions where the turning-on periods of the respective light control parts, which control the light of at least two semiconductor light sources, overlap each other. Therefore, it is possible to suppress the increase of the current that flows at the former stage of each of the switch units, to suppress the increase in power loss at a wiring internal resistor, and to reduce the noise that is generated in a wiring circuit.

According to one or more illustrative aspects of the present invention, each of the light control parts sends the on/off-signals so that one switch unit is turned off and another switch unit is turned on. Accordingly, it is possible to shorten the time corresponding to the portions where the turning-on periods overlap each other, without making the turning-on periods of the respective light control parts, which control the light of at least two semiconductor light sources, overlap each other. Therefore, it is possible to suppress the increase of the current that flows at the former stage of each of the switch units, to suppress the increase in power loss at a wiring internal resistor, and to reduce the noise that is generated in a wiring circuit.

According to one or more illustrative aspects of the present invention, each of the light control parts includes a timer that outputs on/off-signals at an opposite phase when a counted value corresponds to a given set value, and the controller controls the timers so that one timer begins to send the on-signal and count and an on-signal of another timer is sent when a counted value is equal to the given set value. Accordingly, if the timer starts the timer count and counts up and a counted value corresponds to the set value, it is possible to reverse the phase (on/off) of the output of the timer. As a result, it is possible to reliably suppress the increase in power loss at a wiring internal resistor, and to reduce the noise that is generated in a wiring circuit.

### BRIEF DESCRIPTION OF THE DRAWINGS

Fig. 1 is a view showing an example configuration of a light emission control device for a vehicular lamp according to an exemplary embodiment of the invention;
Fig. 2 is a view illustrating an example of an operation of a timer of the light emission control device of Fig. 1;
Fig. 3 is a flowchart illustrating an example of an operation of the light emission control device;
Fig. 4 is a timing diagram showing a first example of an output of the timer;
Fig. 5 is a timing diagram showing a second example of the output of the timer; and
Fig. 6 is a timing diagram showing a third example of the output of the timer.

### DETAILED DESCRIPTION OF EXEMPLARY EMBODIMENTS

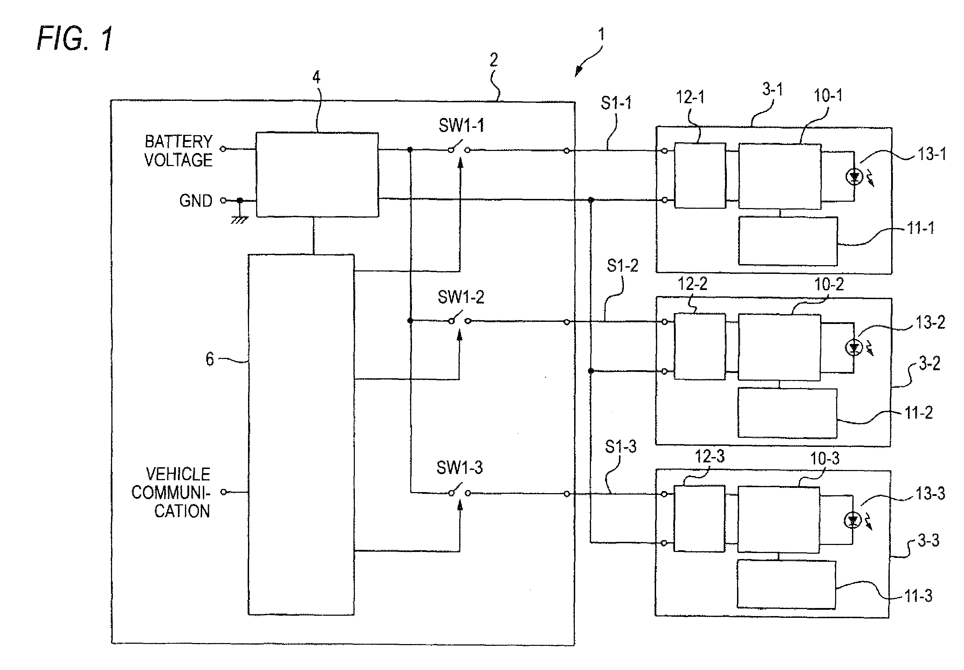

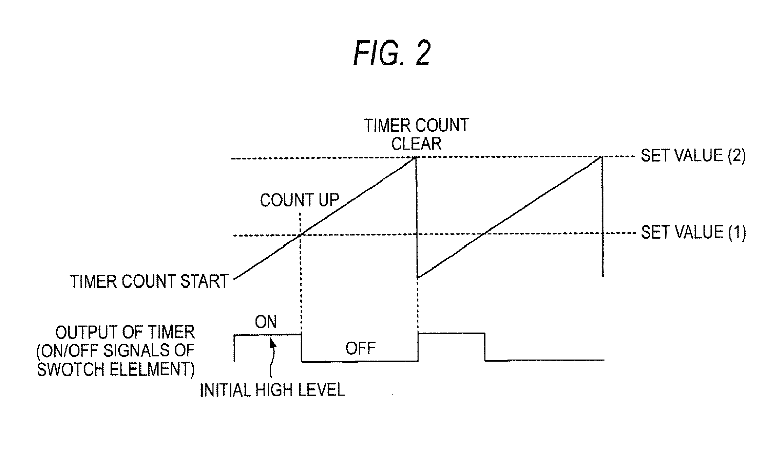

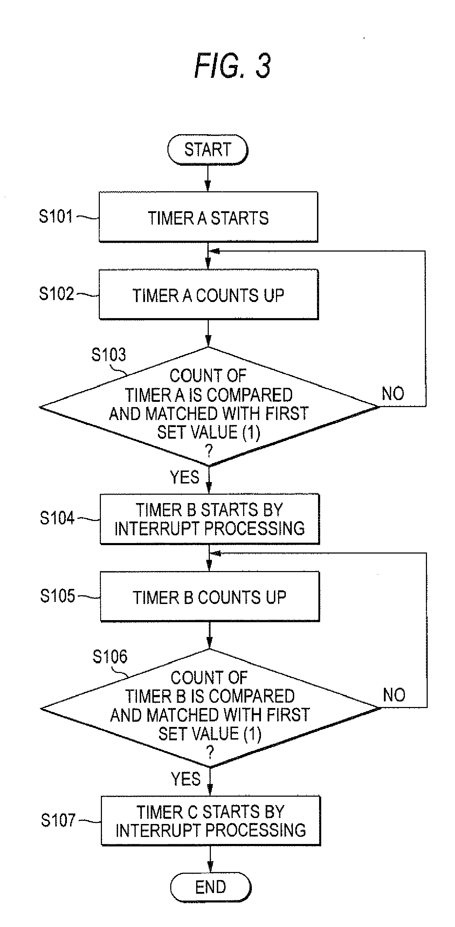

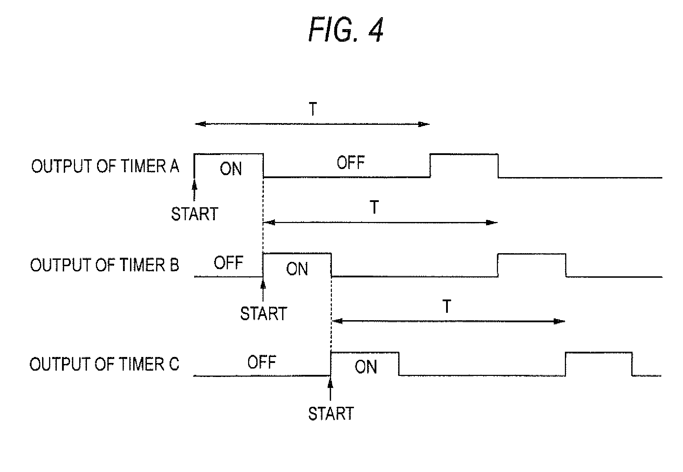

A light emission control device for a vehicular lamp according to an exemplary embodiment of the invention will be described below. Fig. 1 is a view showing an example of a configuration of a light emission control device for a vehicular lamp according to an exemplary embodiment of the invention. Fig. 2 is a view illustrating an example of the operation of a timer (light control part) of the light emission control device. Fig. 3 is a flowchart illustrating an example of the operation of the light emission control device. Fig. 4 is a timing diagram showing a first example of an output of the timer.

As shown in Fig. 1, the light emission control device 1 for a vehicular lamp includes a control unit 2 and a plurality of light source units. In this exemplary embodiment, there are three light source units 3-1 to 3-3. However, the number of light source units may be fewer or more than three. The control unit 2 is electrically coupled to the light source units 3-1 to 3-3 through power supply lines S1-1 to S1-3, respectively. The control unit 2 includes an input circuit 4, a controller 5, and switch elements SW1-1 to SW1-3 that are used to control the turning on and off of the light source units 3-1 to 3-3, respectively.

The input circuit 4 includes a noise filter and a surge protection element, for example, a surge absorber or a power zener diode such as a dump surge.

For example, a MOS transistor or a bipolar transistor is used as each of the switch elements SW1-1 to SW1-3.

The light source units 3-1 to 3-3 include switch regulators 10-1 to 10-3, control circuits 11-1 to 11-3, resonant circuits (noise filters) 12-1 to 12-3, and LEDs 13-1 to 13-3 that are used as semiconductor light sources, respectively. Each of the resonant circuits 12-1 to 12-3 includes at least a coil and a capacitor.

The controller 5 includes a timer (not shown) that is used as a light control part, and a Central Processing Unit (CPU) (not shown).

The operation of the light emission control device 1 will be described below.

The light control, such as light reduction, of the LEDs 13-1 to 13-3 is performed by making the LEDs 13-1 to 13-3 flicker at a high speed. The flicker of the LEDs 13-1 to 13-3 is performed by turning on and off the switch elements SW1-1 to SW1-3 at a high speed (for example, several hundred Hz to several kHz) so that the power is repeatedly supplied or not supplied to the switch regulators 10-1 to 10-3. That is, the switch regulators are repeatedly activated and stopped. For example, pulse width modulation (PWM) light control using a compare match timer has been used as the light control of the LEDs 13-1 to 13-3. PWM control or pulse control using a compare match timer is generally performed by providing two set values that are to be compared and matched. Furthermore, after one timer is operated, another timer may be operated while interrupting the one timer.

As shown in Fig. 2, when a given first set value (1) to be compared and matched is set, if the compare match timer starts the timer count and counts up and a counted value is compared and matched with the first set value (1), the compare match timer reverses the phase (on/off) of the output of the timer. In the example shown in Fig. 2, the initial phase of the output of the timer is set to a high level. Accordingly, when the counted value is compared and matched with the first set value (1), the output of the timer is changed into a low level from a high level. Meanwhile, for example, in the case of 16-bit specification, the set value may be set to a certain value that is, for example, in the range of 0000h to FFFFh (i.e., 1 to 65535).

When a given second set value (2) to be compared and matched is further set, if the compare match timer counts up and a counted value is compared and matched with the second set value (2), the counter is cleared and the compare match timer reverses the phase (on/off) of the output of the timer immediately before comparing and matching. In the example shown in Fig. 2, when the counted value is compared and matched with the second set value (2), the output of the timer is changed into a high level from a low level.

The CPU and the timer control the turning on and off of the switch elements SW1-1 to SW1-3. In the example shown in Fig. 2, the switch elements SW1-1 to SW1-3 are turned on when the output of the timer is high, and the switch elements SW1-1 to SW1-3 are turned off when the output of the timer is low.

A first example of the light control of the light emission control device 1 in a case where the CPU is provided with three timers A, B, and C will be described below with reference to Figs. 3 and 4. In the first example, the outputs of the respective timers have the same on-duty, and the turning-on periods of the three timers A, B, and C do not overlap one another at one cycle T.

The given first and second set values (1) and (2), which are to be compared and matched, are set by the CPU. The first set value (1) and the second set value (2) may be preset. The initial phase of the timer A is set to a high level.

When the timer A starts (Operation S101), the timer A counts up (Operation S102).

Then, it is determined whether the counted value of the timer A equal to the first set value (1) (Operation S103). If the counted value of the timer A is compared and is equal to the first set value (1) (YES in Operation S103), the output of the timer A is changed to a low level (off) from a high level (on) (see Fig. 4). If the counted value of the timer A is not equal to the first set value (1) (NO in Operation S 103), the procedure returns to Operation S102.

If the counted value of the timer A is equal to the first set value (1) (YES in Operation S103), the interrupt processing of a timer B is performed by the CPU (Operation S 104), and the timer B counts up (Operation S105).

It is then determined whether the counted value of the timer B is equal to the first set value (1) (Operation S106). If the counted value of the timer B is equal to the first set value (1) (YES in Operation S106), the output of the timer B is changed to a low level from a high level (see Fig. 4). If the counted value of the timer B is not equal to the first set value (1) (NO in Operation S106), the procedure returns to Operation S105.

If counted value of the timer B is equal to the first set value (1) (YES in Operation S 106), the interrupt processing of the timer C is performed (Operation S 107).

It is then determined whether the counted value of the timer A is equal to the second set value (2). If the counter value of the time A is equal to the second set value (2), the count is cleared and the output of the timer A is changed into a high level from a low level (see Fig. 4). "T" shown in Fig. 4 denotes a time between when the count of the timer A starts and when the count is cleared. This time period is one cycle. The operations for turning on and off the timers A, B, and C are repeated in a regular cycle T.

According to the light control of the above-mentioned first example, since the turning-on periods of the respective timers A, B, and C do not overlap one another, it is possible to suppress the increase of the current that flows at the former stage of each of the switch elements SW1-1 to SW1-3. Accordingly, it is possible to suppress the increase in power loss at a wiring internal resistor, and to reduce the noise that is generated in a wiring circuit.

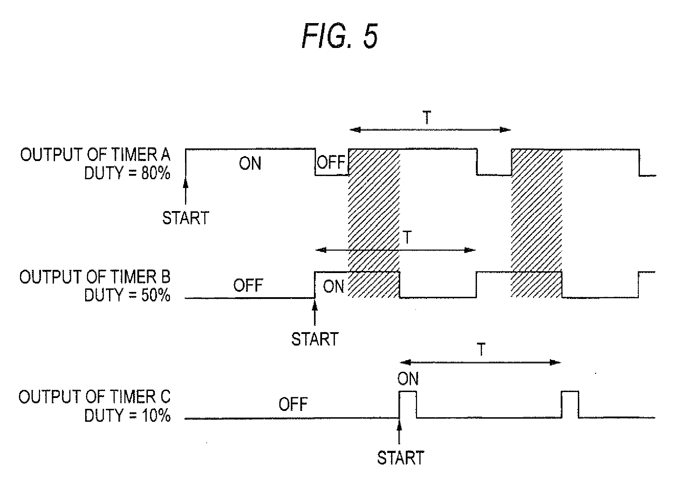

A second example of the light control will be described below with reference to Figs. 3 and 5. Fig. 5 is a timing diagram showing a second example of the output of the timer. In the second example, the outputs of the respective timers A, B, and C have a different on-duty (for example, 80% in the case of the timer A, 50% in the case of the timer B, and 10% in the case of the timer C), and the turning-on periods of the two timers A and B partially overlap each other at one cycle T but the turning-on periods of the timers B and C do not overlap each other. The overlapping portions of the turning-on periods are hatched portions in Fig. 5.

Even in the case of the second example, Operations S101 to S107 are performed like in the case of the first example.

In the second example, the output of the timer A is changed to a low level from a high level and the output of the timer B is changed to a high level from a low level. Further, the output of the timer B is changed to a low level from a high level and the output of the timer C is changed to a high level from a low level.

Accordingly, even when the turning-on periods of the timers A and B overlap each other, the output of the timer A is changed into a low level from a high level and the output of the timer B is changed into a high level from a low level. Therefore, if the above-mentioned processing is performed, it may be possible to shorten the time of overlap of the turning-on periods of the timers A and B, without making the turning-on periods of the timers B and C overlap each other.

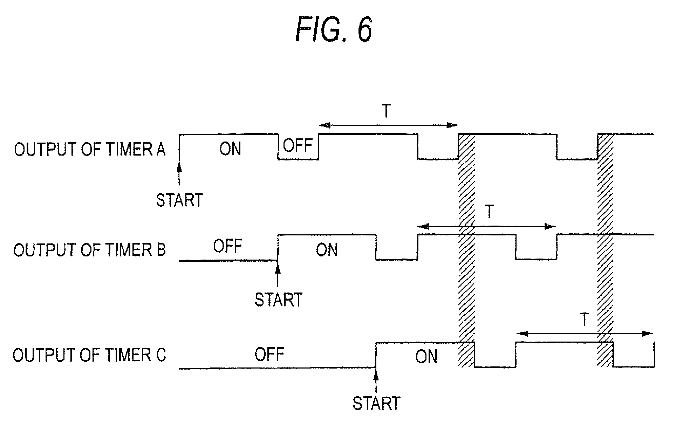

A third example of the light control will be described below with reference to Figs. 3 and 6. Fig. 6 is a timing diagram showing a third example of the output of the timer. In the third example, the outputs of the timers A, B, and C have the same on-duty, and the turning-on periods of the timers A, B, and C partially overlap one another at one cycle T. The overlapping portions of the turning-on periods are hatched portions in Fig. 6.

Even in the case of the third example, Operations S101 to S107 are performed like in the case of the first example.

In the third example, the output of the timer A is changed to a low level from a high level and the output of the timer B is changed to a high level from a low level. Further, the output of the timer B is changed to a low level from a high level and the output of the timer C is changed to a high level from a low level.

Accordingly, even when the turning-on periods of the timers A, B, and C overlap one another, the output of the timer A is changed to a low level from a high level, the output of the timer B is changed to a high level from a low level, and the output of the timer B is changed to a low level from a high level and the output of the timer C is changed to a high level from a low level. Therefore, if the above-mentioned processing is performed, it is possible to shorten the time of overlap of the turning on periods of all the timers A, B, and C.

It is to be noted that three semiconductor light sources (LEDs) have been proposed in the above-mentioned exemplary embodiments. However, the number of semiconductor light sources is not limited to three. As long as the number of semiconductor light sources is two or more, the number of semiconductor light sources may be arbitrary.

The above-mentioned exemplary embodiment is merely illustrative, and the invention may have various modifications without departing from the scope of the invention.

## Claims

1. A light emission control device comprising:
a plurality of semiconductor light sources; and
a control unit comprising:
a plurality of switch units each electrically coupled in series to a corresponding one of the semiconductor light sources and controlling light of the semiconductor light source by being repeatedly turned on and off at regular intervals in a cycle; and
a controller that controls turning on and off of the switch units, the controller comprising a plurality of light control parts that send on/off-signals to the switch units, respectively, such that at least one part of a turning-on period of at least one of the semiconductor light sources overlaps at least one part of a turning-off period of the remaining semiconductor light sources.

2. The light emission control device according to claim **1**,
wherein the turning-on periods of the respective semiconductor light sources do not overlap each other.

3. The light emission control device according to claim **1,**
wherein the turning-on periods of at least two semiconductor light sources partially overlap each other, and
whererin each of the light control parts sends the on/off-signals such that an overlap time of the turning-on periods becomes shorter than that of the turning-on period.

4. The light emission control device according to claim **2** or **3**,
wherein each of the light control parts sends the on/off-signals such that, while one of the switch units is turned off, another switch unit is turned on.

5. The light emission control device according to any one of claims **1** to **4**,
wherein each of the light control parts comprises a timer that outputs the on/off-signals at a reverse phase when a counted value corresponds to a given set value, and
the controller controls the timers such that, while one timer begins to send the on-signal and count, an on-signal of another timer is sent when the counted value corresponds to the given set value.
